(19) Europäisches Patentamt
European Patent Office
Office européen des brevets

(11) **EP 4 642 111 A1**

(12) **EUROPEAN PATENT APPLICATION**

(43) Date of publication:
**29.10.2025  Bulletin 2025/44**

(21) Application number: **25172251.8**

(22) Date of filing: **24.04.2025**

(51) International Patent Classification (IPC):
**H04W 52/50** *(2009.01)*      **H04W 52/14** *(2009.01)*

(52) Cooperative Patent Classification (CPC):
**H04W 52/50; H04W 52/146**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **25.04.2024  KR 20240055503
07.04.2025  KR 20250044690**

(71) Applicant: **KT Corporation
Seongnam-si, Gyeonggi-do 13606 (KR)**

(72) Inventors:
• **LEE, Eun-Jong
   13606 Seongnam-si, Gyeonggi-do (KR)**
• **PARK, Kyujin
   13606 Seongnam-si, Gyeonggi-do (KR)**

(74) Representative: **BCKIP Part mbB
MK1
Landsbergerstraße 98, 3.Stock
80339 München (DE)**

(54) **METHOD AND APPARATUS FOR DETERMINING RACH TRANSMISSION POWER IN SUBBAND FULL-DUPLEX COMMUNICATION**

(57)    Provided are a method and apparatus for determining RACH transmission power in subband full-duplex communication. The method of terminal may include receiving a single piece of random access channel (RACH) resource information, selecting a first RACH occasion belonging to a subband full duplex (SBFD) symbol based on the received single piece of RACH resource information, and determining RACH transmission power for the selected first RACH occasion by applying an offset for the SBFD symbol.

**EP 4 642 111 A1**

Processed by Luminess, 75001 PARIS (FR)

**Description**

CROSS-REFERENCE TO RELATED THE APPLICATION

This application is based on and claims priority on Patent Application No. 10-2024-0055503 filed on Apr. 25, 2024 and No. 10-2025-0044690 filed on Apr. 7, 2025 at the Korean Intellectual Property Office.

BACKGROUND

Technical Field

The present disclosure relates to wireless communication applicable to 5G NR, 5G-Advanced and 6G.

Description of the Related Art

With the increase in the number of communication devices, there is a corresponding rise in communication traffic that must be managed. To handle this increased communication traffic, a next generation 5G system, which is an enhanced mobile broadband communication system compared to the exiting LTE system, has become essential. Such a next generation 5G system has been designed based on scenarios which are classified into Enhanced Mobile BroadBand (eMBB), Ultra-reliability and low-latency communication (URLLC), Massive Machine-Type Communications (mMTC), and more.

eMBB, URLLC, and mMTC represent next generation mobile communication scenarios. eMBB is characterized by high spectrum efficiency, high user experience data rate, and high peak data rate. URLLC is characterized by ultra-reliable, ultra-low latency, and ultra-high availability (e.g., vehicle-to-everything (V2X), Emergency Service, and Remote Control). mMTC is characterized by low cost, low energy consumption, short packets, and massive connectivity (e.g., Internet of Things (IoT)).

SUMMARY

The disclosure is to provide a method and an apparatus for efficiently determining RACH transmission power in subband full-duplex communication.

According to an embodiment, a method of a terminal may be provided for operating in a wireless communication system. The method of the terminal may include receiving a single piece of random access channel (RACH) resource information, selecting a first RACH occasion belonging to a subband full duplex (SBFD) symbol based on the received single piece of RACH resource information, and determining RACH transmission power for the selected first RACH occasion by applying an offset for the SBFD symbol.

According to another embodiment, a terminal may be provided for operating in a wireless communication system. The terminal may include at least one processor; and at least one memory configured to store instructions and operably electrically connectable to the at least one processor, wherein operations performed based on the instructions executed by the at least one processor include receiving a single piece of random access channel (RACH) resource information, selecting a first RACH occasion belonging to a subband full duplex (SBFD) symbol based on the received single piece of RACH resource information, and determining RACH transmission power for the selected first RACH occasion by applying an offset for the SBFD symbol.

The terminal may perform a preamble transmission using the determined RACH transmission power. Here, the determined RACH transmission power may not exceed a maximum transmission power of the preamble, and the maximum transmission power of the preamble may be defined for the SBFD symbol.

Meanwhile, the offset for the SBFD symbol may be defined based on at least one of a medium access control (MAC) layer parameter and a physical (PHY) parameter. To this end, the terminal may receive information on a value for at least one of the MAC layer parameter and the PHY parameter.

The single piece of RACH resource information may be further used for selecting a second RACH occasion belonging to a non-SBFD symbol.

BRIEF DESCRIPTION OF THE DRAWINGS

FIG. 1 is a diagram illustrating a wireless communication system.
FIG. 2 is a diagram illustrating a structure of a radio frame used in new radio (NR).

FIGS. 3A to 3C illustrate exemplary architectures for a wireless communication service.

FIG. 4 illustrates a slot structure of an NR frame.

FIG. 5 shows an example of a subframe type in NR.

FIG. 6 illustrates a structure of a self-contained slot.

FIGS. 7A and 7B show schematic examples of subband full duplex communication.

FIGS. 8A and 8B show examples where an uplink (UL) subband is configured in a downlink (DL) slot according to an embodiment.

FIG. 9 is a flowchart showing a method of operating a terminal according to an embodiment.

FIG. 10 is a flowchart showing a method of operating a terminal according to another embodiment.

FIG. 11 is a block diagram showing apparatuses according to an embodiment of the disclosure.

FIG. 12 is a block diagram showing a terminal according to an embodiment of the disclosure.

FIG. 13 is a block diagram of a processor in accordance with an embodiment.

FIG. 14 is a detailed block diagram of a transceiver of a first apparatus shown in FIG. 11 or a transceiving unit of an apparatus shown in FIG. 12.

## DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5th generation: also known as 5G mobile communication) has been commercialized and the follow-up studies are also ongoing.

The 5th generation mobile communications, as defined by the International Telecommunication Union (ITU), provide a data transmission rate of up to 20 Gbps and a minimum actual transmission rate of at least 100 Mbps anywhere. The official name of the 5th generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

[Table 1]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

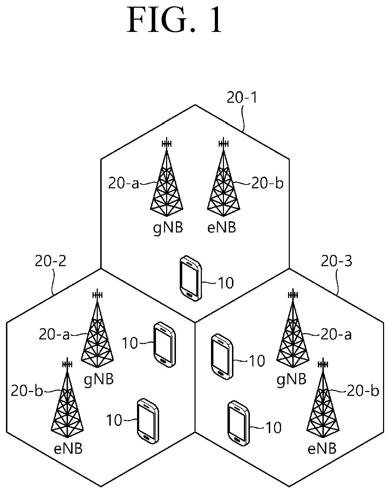

**FIG. 1 is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

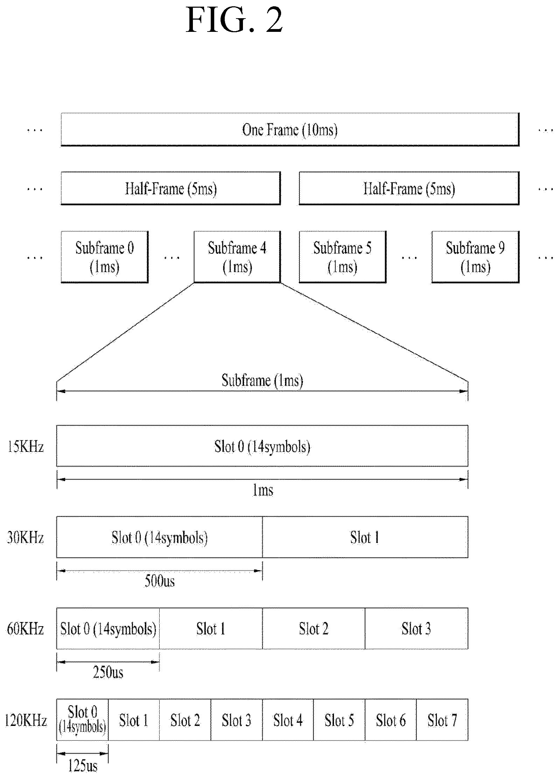

**FIG. 2 is a diagram illustrating a structure of a radio frame used in new radio (NR).**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

**<Support of Various Numerologies>**

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by $\mu$).

[Table 2]

| $\mu$ | $\Delta f=2^{\mu}\cdot 15$ [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot ($N^{slot}_{symb}$), the number of slots per frame ($N^{frame,\mu}_{slot}$), and the number of slots per subframe ($N^{subframe,\mu}_{slot}$) according to each numerology expressed by $\mu$ in the case of a normal CP.

[Table 3]

| $\mu$ | $\Delta f=2^{\mu}\cdot 15$ [kHz] | $N^{slot}_{symb}$ | $N^{frame,\mu}_{slot}$ | $N^{subframe,\mu}_{slot}$ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot ($N^{slot}_{symb}$), the number of slots per frame ($N^{frame,\mu}_{slot}$), and the number of slots per subframe ($N^{subframe,\mu}_{slot}$) of a numerology represented by $\mu$ in the case of an extended CP.

[Table 4]

| $\mu$ | SCS ($15*2^{u}$) | $N^{slot}_{symb}$ | $N^{frame,\mu}_{slot}$ | $N^{subframe,\mu}_{slot}$ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

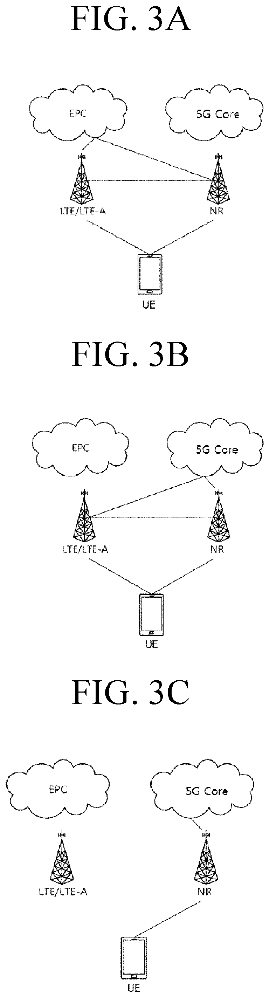

**FIGS. 3A to 3C illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

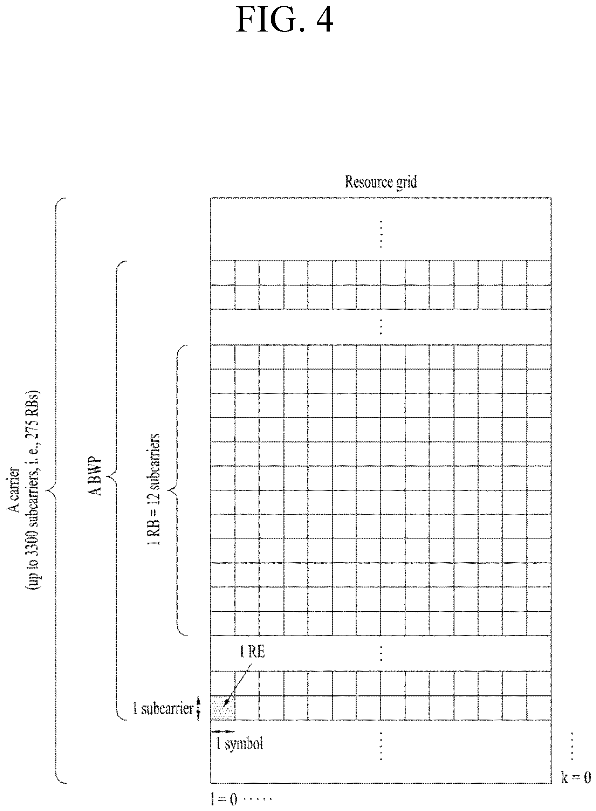

**FIG. 4 illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

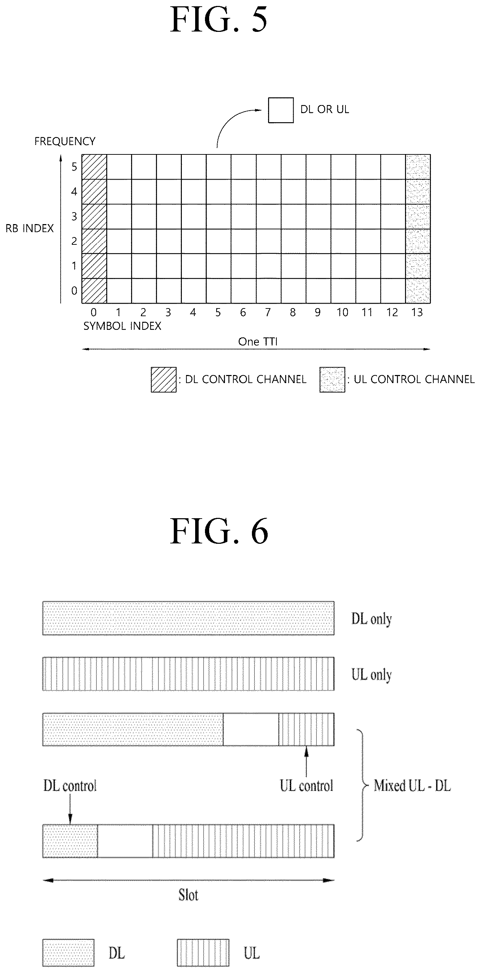

**FIG. 5 shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6 illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be considered. The durations are listed in temporal order.

1. DL only configuration
2. UL only configuration
3. Mixed UL-DL configuration

- DL region + Guard Period (GP) + UL control region
- DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap during a process where a gNB and a UE transition from the transmission mode to the reception mode or a process where the gNB and UE transition from the reception mode to the transmission mode. Some of symbols within a subframe that transition from DL to UL mode may be configured as the GP.

Time division duplex (TDD) refers to a duplexing method widely used in commercial NR, i.e., a 5G mobile communication system. In TDD, time-duration radio resources are divided into downlink slots and uplink slots, where the downlink slots are typically distributed in a higher percentage than the uplink slots based on the distribution ratio of uplink traffic and downlink traffic. However, such limitation in the uplink slot distribution has negative effects in terms of coverage and delay time. Recently, full duplex communication has attracted attention as a technology to solve this problem.

The full duplex communication refers to technology in which the gNB, i.e., the base station performs DL transmission and UL reception simultaneously through the same (or given) radio resources. The UE may also perform DL reception and UL transmission simultaneously. In other words, both the base station and the UE may support full duplex communication. However, unlike the base station in which self-interference cancelation is structurally more feasible, the UE exhibits DL reception performance that is susceptible to self-interference from a UL transmission signal. Therefore, it is generally considered preferable to operate the gNB in full duplex communication and operate the UE in half duplex communication. In addition, the gNB may also primarily consider a subband non-overlapping full duplex communication method in which it performs DL transmission and UL reception simultaneously, but uses different frequency resources for transmission and reception, rather than the same resources between the DL and UL to reduce the effects of self-interference.

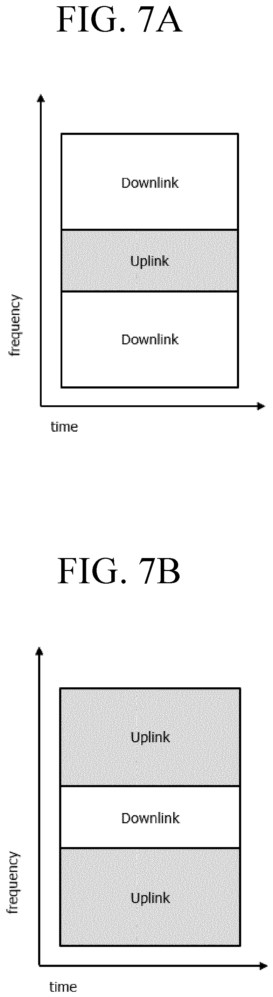

**FIGS. 7A and 7B show schematic illustrations of subband full duplex communication.**

The subband full duplex communication may be referred to as subband full duplex communication (SBFD) or full duplex communication subband (FDSB).

In SBFD, some time-frequency resources on a given carrier are used for the downlink, and some time-frequency resources on the same carrier are used for the uplink. Specifically, the downlink resources and the uplink resources are frequency-division multiplexed, which are separated from each other in the frequency domain and used for transmission and reception.

FIGS. 7A and 7B show examples of SBFD. In the frequency domain, FIG. 7A shows an example where an uplink subband is located between downlink subbands. FIG. 7B shows an example where a downlink subband is located between uplink subbands. Although not shown in the drawings, a guard band or guard period may be located between the downlink subband and the uplink subband to reduce interference.

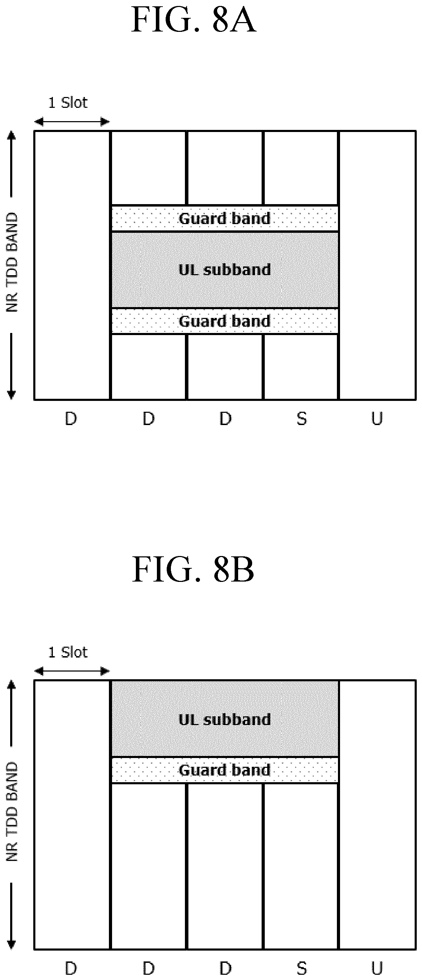

**FIGS. 8A and 8B show examples where an uplink (UL) subband is configured in a downlink (DL) slot according to an embodiment of the present specification.**

Referring to FIGS. 8A and 8B, if a TDD configuration has a DL-to-UL slot ratio of 4:1 in any NR frequency band (where, the last DL slot is a special slot including flexible symbols for DL/UL switching), the UL subband may be configured to support the UL transmission of the UE in some (or all) DL slots among the corresponding DL slots. When the UL subband is configured in any DL slot, the UL subband may be configured either at the center or at the edge of the corresponding frequency band as shown in FIGS. 8A and 8B, and a guard band may be configured between the UL subband and the DL subband in the corresponding slot.

Meanwhile, the remaining frequency resources, excluding the UL subband and the guard band, may be used as the DL subbands for downlink transmission and reception according to the existing slot/symbol configuration information. As shown in FIG. 8A, when the UL subband is configured at the center of the frequency band, a total of two guard bands, one at the top and one at the bottom, are configured around the corresponding UL subband, and two DL subbands -one above and one below- are configured outside the guard bands. Alternatively, as shown in FIG. 8B, when the UL subband is configured at the edge of the frequency band, one guard band and one DL subband may be configured adjacent to the corresponding UL subband.

In the existing NR, the UL-DL slots are defined to be configured in units of cells through RRC signaling specific to each cell. In other words, the patterns of DL symbol, UL symbol, and flexible symbol having certain periods are configured through an RRC message/information element called 'tdd-UL-DL-ConfigurationCommon' for the UL-DL slot configuration. In addition, only the flexible symbol configured through the 'tdd-UL-DL-ConfigurationCommon' may be reconfigured as a UL symbol, DL symbol or flexible symbol via UE-specific RRC signaling, i.e., 'tdd-UL-DL-ConfigurationDedicated'. Alternatively, a method of indicating a dynamic slot format through a PDCCH common to a UE group has also been defined. To this end, NR also supports a method of indicating a dynamic slot format through DCI format 2_0.

According to the existing slot configuration method described above, any one symbol may be configured or indicated as the DL, UL or flexible symbol. For example, as shown in FIG. 8A, any slot format may be configured as "DDDSU" through the existing slot configuration. D refers to a downlink slot and indicates that all OFDM symbols in the corresponding slot are configured for downlink (DL) transmission. U refers to an uplink slot and indicates that all OFDM symbols in the corresponding slot are configured to uplink (UL) transmission. S refers to a special slot and indicates that the corresponding slot includes flexible symbols for DL/UL switching. Generally, the corresponding special slot in the case of a normal CP may include a total of 14 symbols, i.e., 12 DL symbols and 2 flexible symbols. Alternatively, the special slot may include 10 DL symbols, 2 flexible symbols, and 2 UL symbols. In other words, each symbol in a TDD carrier is configured or indicated as only one of DL, UL, or flexible symbols.

However, as shown in FIGS. 8A and 8B, when the UL subband is configured in any DL slot, DL and UL transmissions may occur simultaneously over different frequency resource within the same symbol. In this way, the DL slot or symbol including the UL subband, or the UL slot or symbol including the DL subband, is referred to as an SBFD slot or SBFD symbol in this specification.

Further, in this specification, a slot including only the SBFD symbols will be referred to as the SBFD slot, and a slot including only the symbols based on the existing symbol configuration (i.e., a slot including only symbols that do not include a UL subband, DL subband, and the guard band) is referred to as a non-SBFD slot. Alternatively, a slot including at least one SBFD symbol may also be referred to as an SBFD slot.

Meanwhile, an idle/inactive UE in the current NR performs a random access procedure for the purpose of initial access. Information for this may be received through the "RACH-ConfigCommon information element (IE)" of the system information block 1 (SIB1). A cell that supports 2-step RACH includes "RACH-ConfigCommonTwoStepRA IE" to allow the UEs to perform the initial access through the 2-step RA procedure. The IE may refer to the standard specification TS 38.331.

If the base station supports subband based non-overlapping full duplex, it is considered to configure additional PRACH resources beyond the PRACH resources of the non-SBFD slot or symbol to transmit the PRACH preamble through the corresponding UL subband within the SBFD symbol or SBFD slot where the UL subband is configured as described above. This may not only increase the RACH resources of the UE but also help mitigate RACH delay issues that may arise in TDD configurations. However, the SBFD area is defined to utilize part of the typical DL resources, and thus DL interference may occur in the SBFD slot/symbol if the preamble transmission power is configured at the same level as that of the non-SBFD slot/symbol when the UE transmits the PRACH preamble in the subband of the same slot/symbol. In consideration of this issue, the transmission power for the RACH preamble transmitted in the SBFD slot/symbol may be configured differently from the transmission power for the RACH preamble configured in the non-SBFD slot/symbol.

In the current NR system, PRACH transmission power is configured by the MAC layer based on the preambleReceivedTargetPower set by the RRC and indicates the configured PREAMBLE_RECEIVED_TARGET_POWER to the PHY layer as described below.

"set PREAMBLE_RECEIVED_TARGET_POWER to preambleReceivedTargetPower + DELTA_PREAMBLE + (PREAMBLE_POWER_RAMPING_COUNTER - 1) × PREAMBLE_POWER_RAMPING_STEP + POWER_OFFSET_2-STEP_RA;"

The PHY layer, upon receiving PREAMBLE_RECEIVED_TARGET_POWER from the MAC layer, determines the actual PRACH transmission power using the following equation.

$$P_{\text{PRACH},b,f,c}(i) = min\{P_{\text{CMAX},f,c}(i), P_{\text{PRACH,target},f,c} + PL_{b,f,c}\} \ [\text{dBm}]$$

If the PRACH configuration for an SBFD slot applies and uses the same settings as those defined for a non-SBFD slot/symbol (i.e., PRACH configuration option 1 for SBFD under discussion in RAN1), and the PRACH transmission power is used at the same level as in the non-SBFD case, it may cause interference to the surrounding DL of the SBFD. To address this issue, a different method for determining PRACH transmission power in SBFD slots/symbols may be required.

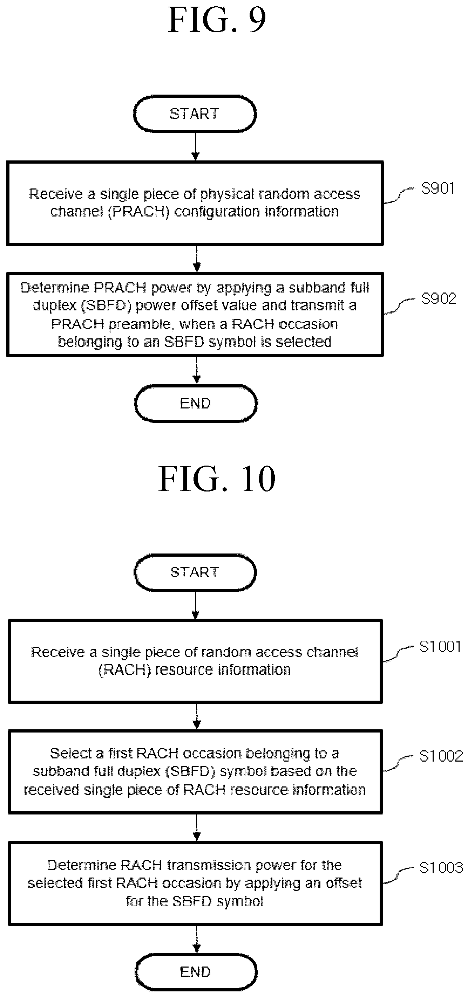

**FIG. 9 is a flowchart showing a method of operating a terminal according to an embodiment.**

The disclosure proposes a method for determining PRACH transmission power when a terminal transmits a RACH preamble using PRACH resources belonging to an SBFD symbol, in accordance with an embodiment. Specifically, when the terminal receives configuration information for PRACH resources belonging to an SBFD symbol based on a single PRACH configuration (for example, when it is defined that the PRACH configuration for an SBFD symbol is received by applying the PRACH configuration for a non-SBFD symbol as is), it is necessary to ensure that even with a single configuration, the PRACH transmission power for a non-SBFD symbol and that for an SBFD symbol may be separately determined. To achieve this, this disclosure proposes defining an offset parameter that allows the terminal to adjust its PRACH transmission power when selecting a RACH occasion (RO) belonging to an SBFD symbol.

Referring to FIG. 9, the terminal receives a single piece of PRACH (physical random access channel) configuration information from the base station (S901). Then, if the terminal selects a RACH occasion belonging to a subband full duplex (SBFD) symbol based on the received single piece of PRACH configuration information, the terminal determines PRACH power by applying an SBFD power offset value (e.g., SBFD-specific power offset) and transmits a PRACH preamble to the base station (S902).

More specifically, when an SBFD-aware terminal receives a single RACH configuration from the base station and recognizes PRACH resources by directly applying the parameters included in the configuration information to the SBFD symbol, it is proposed that the PRACH transmission power ($P_{\text{PRACH},b,f,c}(i)$) may be determined using one or more of the following approaches.

<Approach 1: Defining a new SBFD power offset parameter in the MAC layer>

When the terminal determines to transmit a PRACH preamble in an SBFD symbol (i.e., selects an RO belonging to an SBFD symbol), the terminal selects the value of the SBFD_Power_Offset parameter and sets the PREAMBLE_RECEIVED_TARGET_POWER by applying the SBFD_Power_Offset. Here, the value of the proposed SBFD_Power_Offset may be defined within the standard specifications or determined by the base station and transmitted to the terminal using a message (or information element, IE) that defines the SBFD symbol resources for downlink (DL). When the terminal selects an RO located in an SBFD symbol, the terminal determines PREAMBLE_RECEIVED_TARGET_POWER by applying the corresponding parameter value.

If it is defined within the standard specifications, at least one SBFD power offset value may be specified, and at least one value of SBFD_Power_Offset mapped to relevant information (e.g., SBFD time/frequency (T/F) resource information or resource information of the selected RO) may be defined within the standard specifications. In this case, similar to the typical DELTA_PREAMBLE definition, the value of SBFD_Power_Offset is defined within the standard specifications. When the terminal selects an RO belonging to an SBFD symbol, the terminal selects an appropriate value of SBFD_Power_Offset corresponding to the SBFD symbol or the selected RO and applies the selected value to determine PREAMBLE_RECEIVED_TARGET_POWER. If a single SBFD_Power_Offset is defined, the terminal may set SBFD_Power_Offset to a predefined X dB. Here, X is preferably a constant value less than 0. If the terminal selects an RO belonging to a non-SBFD symbol, it is preferable that SBFD_Power_Offset is set to 0. In other words, the SBFD_Power_Offset is initialized to 0 as part of the RACH parameter initialization process.

The operation of the MAC layer of a terminal to which the aforementioned Approach 1 has been applied is described below.

The MAC entity shall, for each Random Access Preamble:

> if the preamble and PRACH occasion in SBFD symbols is selected:

>> select the value of SBFD_POWER_OFFSET based on the configured SBFD symbols, or
>> set SBFD_POWER_OFFSET to X dB.

> set PREAMBLE_RECEIVED_TARGET_POWER to preambleReceivedTargetPower + DELTA_PREAMBLE + SBFD_POWER_OFFSET + (PREAMBLE_POWER_RAMPING_COUNTER - 1) $\times$ PREAMBLE_POWER_RAMPING_STEP + POWER_OFFSET_2STEP_RA;
> instruct the physical layer to transmit the Random Access Preamble using the selected PRACH occasion, corresponding RA-RNTI (if available), PREAMBLE_INDEX, and PREAMBLE_RECEIVED_TARGET_POWER.

Alternatively, it may be defined to utilize the typical DELTA_PREAMBLE parameter value. In this case, a value may be added to the existing table that defines DELTA_PREAMBLE, allowing the determination of a different power offset when an SBFD symbol is selected, in addition to specifying the preamble format for the typical preamble format.

If the value of sbfdPowerOffset is signaled from the base station to the terminal, the terminal may apply the received value to PREAMBLE_RECEIVED_TARGET_POWER. The operation of the MAC layer of a terminal to which this approach is applied is as follows.

The MAC entity shall, for each Random Access Preamble:

> if the preamble and PRACH occasion in SBFD symbols is selected:

>> set SBFD _POWER_OFFSET to sbfdPowerOffset

> set PREAMBLE_RECEIVED_TARGET_POWER to preambleReceivedTargetPower + DELTA_PREAMBLE + SBFD_POWER_OFFSET + (PREAMBLE _POWER_RAMPING_COUNTER - 1) $\times$ PREAMBLE_POWER RAMPING_STEP + POWER_OFFSET_2STEP_RA;
> instruct the physical layer to transmit the Random Access Preamble using the selected PRACH occasion, corresponding RA-RNTI (if available), PREAMBLE_INDEX, and PREAMBLE_RECEIVED_TARGET_POWER.

<Approach 2: Defining a new SBFD power offset parameter in the PHY layer>

When instructed by the MAC layer to transmit a PRACH preamble in an RO belonging to an SBFD symbol, the PHY layer determines the PRACH transmission power by taking into account the SBFD_Power_Offset parameter.

More specifically, the terminal determines the PRACH transmission power using an equation that incorporates the proposed offset parameter value. An example of the proposed equation is as follows.

$$P_{PRACH,b,f,c}(i) = \min\{P_{CMAX,f,c}(i),\ P_{PRACH,target,f,c} + PL_{b,f,c} + X\}\ [dBm]$$

Here, $P_{CMAX,f,c}(i)$ represents the maximum output power of the terminal set for carrier f of cell c within transmission occasion i, $P_{PRACH,target,f,c}$ represents the target power for PRACH transmission in carrier f of cell c, and $PL_{b,f,c}$ represents the path loss for the selected beam b in carrier f of cell c. Additionally, X may either be defined in the standard specification or configured by the base station, as described in Approach 1.

If at least one SBFD power offset value is defined in the standard, at least one value of SBFD_Power_Offset mapped to relevant information (e.g., SBFD time/frequency (T/F) resource information or the resource information of the selected RO) may also be specified within the standard. In this case, when the terminal is instructed by a higher layer to transmit a preamble using an RO belonging to an SBFD symbol, the terminal selects an appropriate SBFD_POWER_OFFSET value among the predefined values in the standard that corresponds to the configured SBFD symbol or the selected RO and applies the selected value to X in the given equation. If a single SBFD_POWER_OFFSET is defined, the UE may determine the PRACH transmission power using the constant value defined as X. Here, X is preferably an integer value that is less than zero.

If the value of sbfdPowerOffset (e.g., SBFD_POWER_OFFSET) is signaled from the base station to the terminal, the terminal applies the received value to the given equation to determine the PRACH transmission power. If sbfdPower-Offset (e.g., SBFD_POWER_OFFSET) is not configured by the base station, X is set to 0. In other words, if the terminal selects an RO belonging to a non-SBFD symbol, or selects an RO belonging to an SBFD symbol without applying a different transmission power, the typical PRACH transmission power is used without modification.

<Approach 3: Definition of a new $P_{CMAX,f,c}(i)$ applied to SBFD symbols>

The $P_{CMAX,f,c}(i)$ applied in the existing NR is defined as follows.

$P_{CMAX,f,c}(i)$ is the UE configured maximum output power for carrier f of cell c within transmission occasion i.

In accordance with an embodiment, an SBFD-aware UE ensures that different $P_{CMAX,f,c}(i)$ values are set for SBFD symbols and non-SBFD symbols. When the maximum transmission power for an SBFD symbol is configured, if the UE transmits a preamble in an RO belonging to an SBFD symbol, the maximum transmission power for the SBFD symbol is set as the upper limit for the preamble transmission power. The UE then selects the smaller value between $P_{CMAX,f,c}(i)$ configured for the SBFD symbol and $P_{PRACH,target,f,c} + PL_{b,f,c}$, as expressed in the following equation. Here, $P_{PRACH,target,f,c}$ represents the target power for PRACH transmission in carrier f of cell c, and $PL_{b,f,c}$ represents the path loss for the selected beam b in carrier f of cell c.

$$P_{PRACH,b,f,c}(i) = \min\{P_{CMAX,f,c}(i),\ P_{PRACH,target,f,c} + PL_{b,f,c}\}\ [dBm]$$

**FIG. 10 is a flowchart showing a method of operating a terminal according to another embodiment.**

Referring to FIG. 10, the terminal receives a single piece of random access channel (RACH) resource information from the base station (S1001). Then, based on the received single piece of RACH resource information, the terminal selects a first RACH occasion belonging to a subband full-duplex (SBFD) symbol (S1002). Subsequently, the terminal determines RACH transmission power for the selected first RACH occasion by applying an offset for the SBFD symbol (e.g., SBFD-specific power offset) (S1003).

The terminal may perform a preamble transmission using the determined RACH transmission power. Here, the determined RACH transmission power may not exceed the maximum allowed transmission power of the preamble, and the maximum transmission power of the preamble may be defined for the SBFD symbol.

Meanwhile, the offset for the SBFD symbol may be defined based on at least one of a medium access control (MAC) layer parameter and a physical (PHY) parameter. To this end, the terminal may receive value information for at least one of the MAC layer parameter and the PHY parameter (e.g., a value of at least one of the MAC or PHY layer parameter).

The single piece of RACH resource information may be further used for selecting a second RACH occasion belonging to a non-SBFD symbol.

The embodiments described so far may be implemented through various means. For example, the embodiments may be implemented by hardware, firmware, software, or a combination thereof. Specifically, the implementation will be described below with reference to the accompanying drawings.

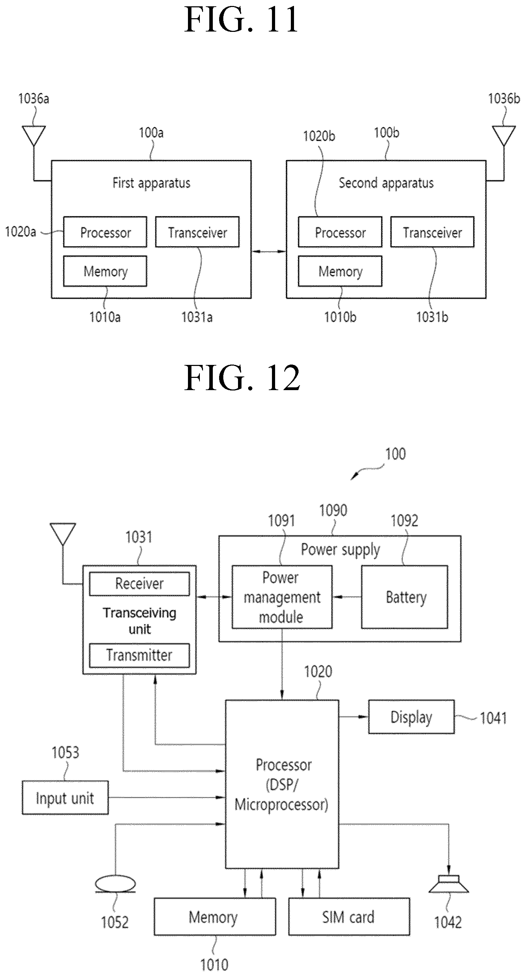

**FIG. 11 is a block diagram showing apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 12 is a block diagram showing a terminal (e.g., user equipment: UE) according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON™ series of processors made by Qualcomm®, EXYNOS™ series of processors made by Samsung®, A series of processors made by Apple®, HELIO™ series of processors made by MediaTek®, ATOM™ series of processors made by Intel®, KIRIN™ series of processors made by HiSilicon®, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

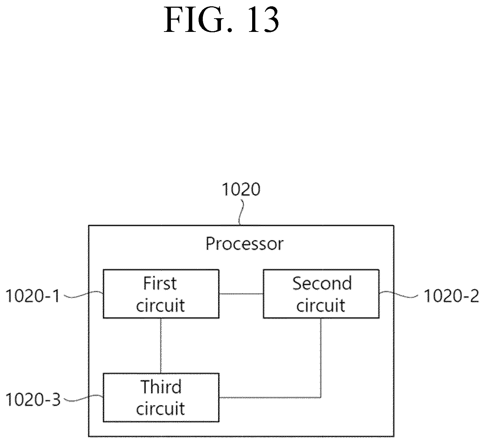

**FIG. 13 is a block diagram of a processor in accordance with an embodiment.**

Referring to FIG. 13, a processor 1020 may include a plurality of circuits to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

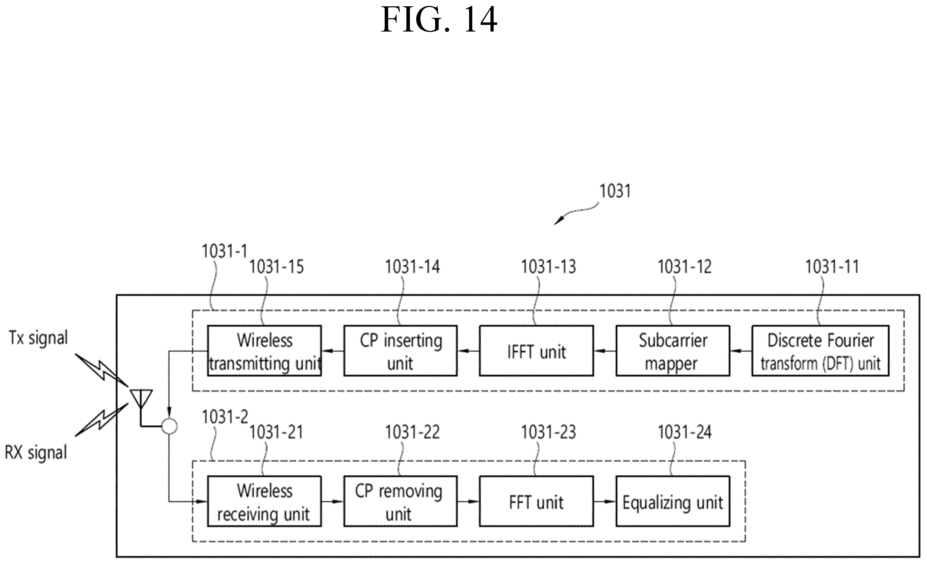

**FIG. 14 is a detailed block diagram of a transceiver of a first apparatus shown in FIG. 11 or a transceiving unit of an apparatus shown in FIG. 12.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, when a terminal performs a RACH procedure using a RACH occasion (RO) belonging to a subband full duplex (SBFD) symbol based on a single piece of RACH configuration information, this has the effect of reducing interference in the downlink (DL) surrounding the SBFD symbol, which results from applying the preamble transmission power defined for a non-SBFD.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

**Claims**

1. A method of operating a terminal in a wireless communication system, the method comprising:

   receiving a single piece of random access channel (RACH) resource information;
   selecting a first RACH occasion belonging to a subband full duplex (SBFD) symbol based on the received single piece of RACH resource information; and
   determining RACH transmission power for the selected first RACH occasion by applying an offset for the SBFD symbol.

2. The method of claim 1, further comprising:
   transmitting a preamble using the determined RACH transmission power.

3. The method of claim 2, wherein the determined RACH transmission power is equal to or less than a maximum allowed transmission power of the preamble, and the maximum allowed transmission power of the preamble is defined for the SBFD symbol.

4. The method of claim 1, wherein the offset for the SBFD symbol is defined based on at least one of a medium access control (MAC) layer parameter and a physical (PHY) parameter.

5. The method of claim 1, further comprising:
   receiving value information for at least one of the MAC layer parameter and the PHY parameter.

6. The method of claim 1, wherein the single piece of RACH resource information is further used for selecting a second RACH occasion belonging to a non-SBFD symbol.

7. A terminal in a wireless communication system comprising:

at least one processor; and
at least one memory configured to store instructions and operably electrically connectable to the at least one processor,
wherein operations performed based on the instructions executed by the at least one processor comprise:

receiving a single piece of random access channel (RACH) resource information;
selecting a first RACH occasion belonging to a subband full duplex (SBFD) symbol based on the received single piece of RACH resource information; and
determining RACH transmission power for the selected first RACH occasion by applying an offset for the SBFD symbol.

8. The terminal of claim 7, wherein the operations further comprise:
transmitting a preamble using the determined RACH transmission power.

9. The terminal of claim 8, wherein the determined RACH transmission power is equal to or less than a maximum allowed transmission power of the preamble, and the maximum allowed transmission power of the preamble is defined for the SBFD symbol.

10. The terminal of claim 7, wherein the offset for the SBFD symbol is defined based on at least one of a medium access control (MAC) layer parameter and a physical (PHY) parameter.

11. The terminal of claim 7, wherein the operations further comprise:
receiving value information for at least one of the MAC layer parameter and the PHY parameter.

12. The terminal of claim 7, wherein the single piece of RACH resource information is further used for selecting a second RACH occasion belonging to a non-SBFD symbol.

# FIG. 1

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz

| Slot 0 (14symbols) |
|---|

1ms

30KHz

| Slot 0 (14symbols) | Slot 1 |
|---|---|

500us

60KHz

| Slot 0 (14symbols) | Slot 1 | Slot 2 | Slot 3 |
|---|---|---|---|

250us

120KHz

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 3A

# FIG. 3B

# FIG. 3C

# FIG. 4

# FIG. 5

# FIG. 6

# FIG. 7A

# FIG. 7B

# FIG. 8A

# FIG. 8B

# FIG. 9

```
                    ┌─────────────┐
                    │    START    │
                    └─────────────┘
                           │
                           ▼
   ┌──────────────────────────────────────────────┐
   │  Receive a single piece of physical random   │ ─── S901
   │  access channel (PRACH) configuration        │
   │  information                                  │
   └──────────────────────────────────────────────┘
                           │
                           ▼
   ┌──────────────────────────────────────────────┐
   │  Determine PRACH power by applying a subband  │ ─── S902
   │  full duplex (SBFD) power offset value and    │
   │  transmit a PRACH preamble, when a RACH       │
   │  occasion belonging to an SBFD symbol is      │
   │  selected                                     │
   └──────────────────────────────────────────────┘
                           │
                           ▼
                    ┌─────────────┐
                    │     END     │
                    └─────────────┘
```

# FIG. 10

```
                    ┌─────────────┐
                    │    START    │
                    └─────────────┘
                           │
                           ▼
   ┌──────────────────────────────────────────────┐
   │  Receive a single piece of random access     │ ─── S1001
   │  channel (RACH) resource information          │
   └──────────────────────────────────────────────┘
                           │
                           ▼
   ┌──────────────────────────────────────────────┐
   │  Select a first RACH occasion belonging to a  │ ─── S1002
   │  subband full duplex (SBFD) symbol based on   │
   │  the received single piece of RACH resource   │
   │  information                                  │
   └──────────────────────────────────────────────┘
                           │
                           ▼
   ┌──────────────────────────────────────────────┐
   │  Determine RACH transmission power for the    │ ─── S1003
   │  selected first RACH occasion by applying an  │
   │  offset for the SBFD symbol                   │
   └──────────────────────────────────────────────┘
                           │
                           ▼
                    ┌─────────────┐
                    │     END     │
                    └─────────────┘
```

# FIG. 11

# FIG. 12

# FIG. 13

# FIG. 14

EP 4 642 111 A1

European Patent Office
Europäisches Patentamt
European Patent Office
Office européen des brevets

# EUROPEAN SEARCH REPORT

**Application Number**

EP 25 17 2251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/035329 A1 (ERICSSON TELEFON AB L M [SE]) 15 February 2024 (2024-02-15) <br> * page 5, line 1 - page 47, line 17 * <br> ----- | 1-12 | INV. H04W52/50 <br><br> ADD. H04W52/14 |
| X | US 2023/062577 A1 (RUDOLF MARIAN [CA] ET AL) 2 March 2023 (2023-03-02) <br> * paragraph [0173] - paragraph [0261]; figures 11-22 * <br> ----- | 1-12 | |
| A | "3rd Generation Partnership Project; Technical Specification Group Radio Access Network; NR; Medium Access Control (MAC) protocol specification (Release 18)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. V18.1.0 4 April 2024 (2024-04-04), pages 1-322, XP052598625, Retrieved from the Internet: URL:https://ftp.3gpp.org/Specs/archive/38_series/38.321/38321-i10.zip 38321-i10.docx [retrieved on 2024-04-04] * the whole document * <br> ----- | 1-12 | |
| | -/-- | | TECHNICAL FIELDS SEARCHED (IPC) <br><br> H04W |

The present search report has been drawn up for all claims

| Place of search | Date of completion of the search | Examiner |
|---|---|---|
| The Hague | 14 August 2025 | Boetzel, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 25 17 2251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "3rd Generation Partnership Project; Technical Specification Group Radio Access Network; NR; Radio Resource Control (RRC) protocol specification (Release 18)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. V18.1.0 1 April 2024 (2024-04-01), pages 1-1649, XP052598132, Retrieved from the Internet: URL:https://ftp.3gpp.org/Specs/archive/38_series/38.331/38331-i10.zip 38331-i10.docx [retrieved on 2024-04-01] * the whole document * ----- | 1-12 | |

TECHNICAL FIELDS
SEARCHED       (IPC)

The present search report has been drawn up for all claims

| Place of search | Date of completion of the search | Examiner |
|---|---|---|
| The Hague | 14 August 2025 | Boetzel, Ulrich |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

**EP 4 642 111 A1**

## ANNEX TO THE EUROPEAN SEARCH REPORT
## ON EUROPEAN PATENT APPLICATION NO.

EP 25 17 2251

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2025

| Patent document cited in search report | Publication date | Patent family member(s) | Publication date |
|---|---|---|---|
| WO 2024035329 A1 | 15-02-2024 | CN 119999319 A | 13-05-2025 |
| | | WO 2024035329 A1 | 15-02-2024 |
| US 2023062577 A1 | 02-03-2023 | KR 20240042411 A | 02-04-2024 |
| | | US 2023062577 A1 | 02-03-2023 |
| | | WO 2023018122 A1 | 16-02-2023 |

EPO FORM P0459

For more details about this annex : see Official Journal of the European Patent Office, No. 12/82

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1020240055503 A

- WO 1020250044690 A